# DEMANDE DE BREVET EUROPEEN

(11) **EP 2 581 856 A1**
(43) Date de publication de la demande: **17.04.2013**
(21) Numéro de dépôt: 11184933.7
(22) Date de dépôt: 12.10.2011
(51) Int. Cl.: G06K 19/077, A44C 5/02

(54) **Bracelet ou collier à éléments interchangeables**

(71) Demandeur: Magnenat, Thierry, 1185 Mont-sur-Rolle (CH)
(72) Inventeur: Magnenat, Thierry, 1185 Mont-sur-Rolle (CH)
(74) Mandataire: Wenger, Joel-Théophile

(57) **Abrégé**

Le bracelet ou coller selon l'invention comprend un élément principal et une pluralité d'éléments secondaires interchangeables non nécessairement compatibles électriquement tout en pouvant être assemblés mécaniquement entre eux. Il constitue un jeu dont le but est d'obtenir des éléments compatibles électriquement par échange auprès d'autres possesseurs du jeu. Lorsqu'un bracelet ou collier est formé d'éléments tous mutuellement compatibles, un dispositif de signalisation de l'élément principal s'active en émettant un signal lumineux et/ou sonore. De plus, le dispositif de signalisation de l'élément principal se complète par un dispositif émetteur / récepteur radiofréquence qui s'enclenche afin d'établir une communication dans un rayon d'une dizaine de mètres avec d'autre bracelets formés d'éléments tous compatibles. Les bracelets communicants émettent alors des signaux lumineux et/ou sonores permettant à leurs possesseurs de s'identifier afin de former un groupe.

## Description

### Domaine de l'invention

La présente invention se rapporte à des bracelets ou collier composés d'éléments amovibles. Plus particulièrement, ces éléments sont configurés de manière à être échangés avec d'autres éléments présentant des caractéristiques communes à des éléments existants du bracelet ou du collier.

### Arrière plan technique

Quelques documents de l'art antérieur décrivent des bracelets ou des colliers comportant des éléments amovibles, par exemple:
US5605059 décrit un bracelet extensible comprenant une bande élastique jointe à ses deux extrémités et une pluralité de pièces tubulaires enfilées sur la bande élastique. Chaque pièce tubulaire a une extrémité d'un diamètre plus grand que celui de l'autre extrémité de façon à permettre à d'insérer deux pièces consécutives l'une dans l'autre selon un certain angle pour former un cercle. Selon une variante, les extrémités du bracelet sont attachées de manière amovible et chaque pièce tubulaire comporte un embout à une extrémité pour connecter une extrémité d'une pièce tubulaire suivante.
US6880364, décrit un bracelet d'amitié à porter au poignet. Ce bracelet comporte une bande extensible munie d'un dispositif d'ouverture et de fermeture de la bande. Plusieurs éléments amovibles sont enfilés sur la bande de manière à permettre un échange avec des éléments d'autres bracelets. Chaque élément comporte un motif ou un symbole sur sa surface pour l'échange avec des éléments d'autres bracelets ayant des motifs et des symboles similaires ou différents sur leur surface.
W02005/045742A2 décrit un bracelet d'identification de personnes ou d'objets comportant une première zone d'identification imprimée lisible et/ou une puce RFID (Radio Frequency IDenfication) lisible au moyen d'un lecteur approprié. Le bracelet inclut de plus, sur une seconde zone, plusieurs étiquettes adhésives détachables chacune également munies d'impressions lisibles et/ou d'une puce RFID. Les étiquettes sont détachables individuellement du bracelet et peuvent être collées sur divers objets en relation avec le porteur du bracelet, les informations contenues dans les étiquettes correspondent à celles de la première zone sur le bracelet.

### Description sommaire de l'invention

Un but de la présente invention est de fournir un bracelet ou un collier servant de moyen d'identification de personnes dans un groupe tout en apportant un aspect ludique par l'échange d'éléments pour devenir un membre du groupe possédant un bracelet ou un collier ayant une configuration finale.

Ce but est atteint par un bracelet ou collier formé par une pluralité d'éléments interchangeables reliés les uns à la suite des autres au moyen d'une interface mécanique commune fixant chaque élément de manière amovible caractérisé en ce que ledit bracelet ou collier comporte un élément principal comprenant au moins un dispositif de signalisation et au moins une liaison à un élément secondaire de la pluralité d'éléments secondaires formant le bracelet ou collier, ledit élément principal comprend de plus un dispositif de détection de configuration des éléments secondaires utilisant une interface électrique combinée avec l'interface mécanique commune, la configuration des éléments secondaires du collier ou bracelet étant définie par un état de compatibilité électrique mutuelle desdits éléments secondaires, le dispositif de signalisation de l'élément principal étant apte à signaler une compatibilité électrique mutuelle réussie et à rester dans un état de veille lorsqu'au moins un élément secondaire est incompatible électriquement.

Le bracelet selon l'invention se compose d'un élément principal aux extrémités duquel est connectée une chaîne de plusieurs éléments amovibles de manière à former un bracelet ou un collier. Les éléments se connectent entre eux à la fois mécaniquement et électriquement.

Le bracelet ou coller est fourni en général sous forme d'éléments détachés non nécessairement compatibles électriquement tout en pouvant être assemblés mécaniquement entre eux. Il constitue un jeu dont le but est d'obtenir des éléments compatibles électriquement par échange auprès d'autres possesseurs du jeu. Lorsqu'un bracelet ou collier est formé d'éléments tous mutuellement compatibles, le dispositif de signalisation de l'élément principal s'active en émettant un signal lumineux et/ou sonore.

De plus, le dispositif de signalisation de l'élément principal se complète par un dispositif émetteur / récepteur radiofréquence (Bluetooth ou autre protocole) qui s'enclenche afin d'établir une communication dans un rayon d'une dizaine de mètres avec d'autre bracelets formés d'éléments tous compatibles. Les bracelets communicants émettent alors des signaux lumineux et/ou sonores permettant à leurs possesseurs de s'identifier afin de former un groupe de « Super Best Friends ».

La compatibilité mutuelle des éléments peut être établie selon deux variantes, à savoir :
- disposition des contacts électriques à chaque extrémité des éléments. En se connectant mécaniquement les contacts de deux éléments compatibles se touchent et établissent la connexion électrique.
- détection de la compatibilité par RFID (Radio Frequency IDenfication). Chaque élément possède une puce RFID contenant un numéro qui est lu par l'élément principal lors de la connexion d'un élément à un autre. Lorsque le numéro ainsi lu correspond à un numéro enregistré dans une mémoire de l'élément principal, l'élément est considéré comme compatible.

Selon d'autre variantes, le bracelet peut se présenter soit sous une forme rigide avec des éléments s'imbriquant rigidement les uns aux autres, soit sous une forme souple avec une bande ou un ruban support flexible isolant sur lequel des éléments sont fixés mécaniquement et connectés électriquement entre eux.

### Brève description des figures

L'invention sera mieux comprise grâce à la description détaillée qui va suivre et qui se réfère aux dessins annexés qui sont donnés à titre d'exemples nullement limitatifs, à savoir:
- La figure 1 montre une variante d'un bracelet selon l'invention composé d'un élément principal et d'une pluralité d'éléments secondaires tous électriquement compatibles entre eux. Le circuit électrique formé par un conducteur à l'intérieur des éléments est continu.
- La figure 2 montre le bracelet de la figure 1 composé d'un élément principal et d'une pluralité d'éléments secondaires dont certains sont incompatibles électriquement. Le circuit électrique formé par un conducteur à l'intérieur des éléments est discontinu.
- Les figures 3a et 3b montrent une vue schématique d'une extrémité de deux éléments électriquement incompatibles pourvue d'une interface mécanique commune et de contacts électriques. Les contacts d'un élément sont décalés par rapport à ceux de l'élément voisin.
- La figure 4 montre une variante du bracelet avec des éléments secondaires équipés de puces électroniques RFID contrôlées par l'élément principal.
- La figure 5 montre une portion d'une variante du bracelet ou collier comprenant un ruban support flexible sur lequel sont disposés l'élément principal et les éléments secondaires. L'interface électrique est constituée soit de contacts pouvant se connecter sur des pistes conductrices imprimées sur le ruban support soit de puces RFID contrôlées par l'élément principal.
- La figure 6 représente un schéma bloc montrant les composants de l'élément principal comprenant des dispositifs de détection de configuration, de signalisation, de communication ainsi que des interfaces électriques et une batterie d'alimentation.

### Description détaillée de l'invention

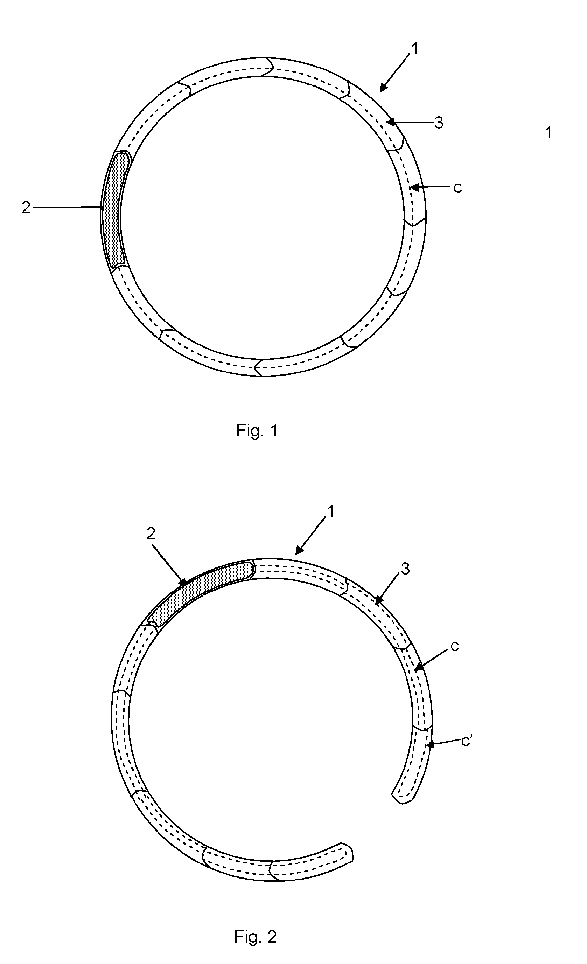

Un bracelet ou collier 1 selon l'invention peut être fermé comme représenté sur la figure 1 ou ouvert comme sur la figure 2. Selon une réalisation préférée, les éléments 2, 3 sont rigides ou semi-rigides et reliés rigidement entre eux à leurs extrémités par une interface mécanique 4 commune par exemple du type baïonnette afin d'assurer un positionnement angulaire constant d'un élément par rapport à un autre, contrairement à une interface à filetage. L'élément principal 2 et un nombre d'élément secondaires 3 dépendant de leur longueur individuelle et de la longueur totale du bracelet ou collier sont reliés bout à bout de manière à former cercle. Un même bracelet ou collier 1 peut comporter des éléments de longueur variable dépendant d'aspects esthétiques de l'ensemble du bracelet ou collier.

L'interface mécanique peut également se présenter sous une forme similaire à celle d'un connecteur push-pull circulaire du type Lemo ® ou Fischer ®, ou rectangulaire du type RJ45 ou de tout autre mécanisme à verrouillage conservant le positionnement angulaire d'un élément par rapport à son voisin.

Dans le cas d'un bracelet ou collier ouvert, les éléments de terminaison peuvent comporter une seule extrémité munie de l'interface mécanique et électrique.

Selon une variante, l'élément principal peut constituer un des éléments terminaux d'un bracelet ouvert et dans ce cas ne comporter qu'une extrémité munie des interfaces mécanique et électrique.

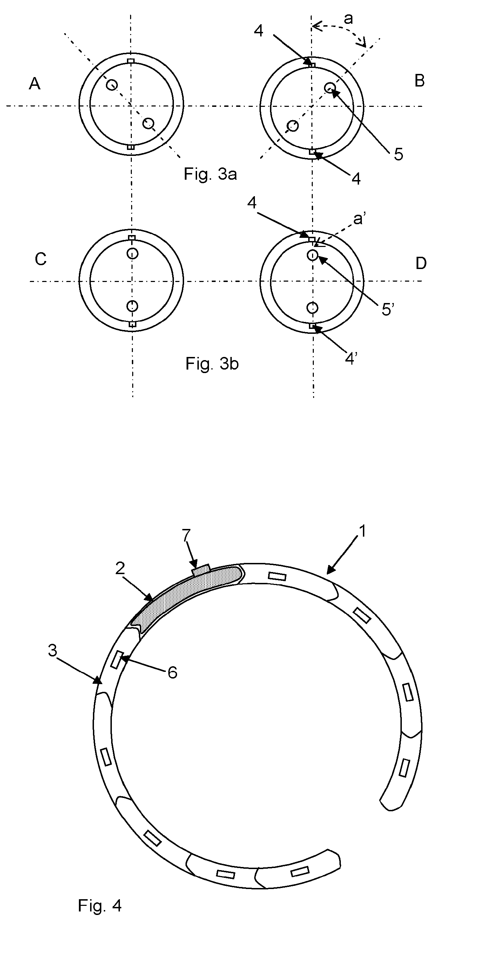

L'interface électrique d'un élément comprend, à au moins une des extrémités de l'élément au moins un contact électrique qui se connecte de préférence par pression à un contact correspondant d'un élément voisin lorsque ces éléments sont électriquement compatibles. Selon les exemples des figures 3a et 3b, lorsque deux éléments sont imbriqués l'un à l'autre par une interface mécanique 4 à encoches et ergots, les deux contacts se connectent lorsque leur position angulaire (a, a') par rapport aux ergots ou aux encoches correspond. Les éléments A et B dont les extrémités sont représentés par la figure 3a avec deux contacts positionnés à un angle a = 45° par rapport aux ergots ou encoches sont mutuellement compatibles électriquement tout comme les éléments C et D de la figure 3b avec les contacts positionnés à un angle a' = 0° par rapport aux ergots ou encoches. Par contre, les éléments avec les extrémités A et C, A et D, B et D, B et C avec des contacts décalés ne pouvant pas se connecter sont incompatibles électriquement tout en étant compatibles mécaniquement car l'interface mécanique est commune à tous les éléments du bracelet ou collier.

Le nombre de contacts ainsi que leur disposition par rapport aux ergots et encoches de l'interface mécanique ne sont pas imposés et restent au libre choix du fabricant ou du styliste du bracelet ou du collier.

Selon une variante préférée, l'élément principal 2 ou plutôt le dispositif de détection de configuration détecte un état de compatibilité électrique en vérifiant la continuité ou la résistance d'un circuit électrique formé par des conducteurs traversant chaque élément secondaire d'une extrémité à l'autre et qui se connectent ou non via les contacts de l'interface électrique. Selon un exemple une signalisation lumineuse ou sonore est activée sur l'élément principal lorsque la continuité du circuit électrique est réalisée ou lorsque sa résistance est nulle. Dans le cas contraire, en présence d'un élément incompatible électriquement entraînant une résistance infinie du circuit électrique, le dispositif de détection de configuration reste dans un état de veille..

La figure 1 illustre schématiquement un bracelet ou collier fermé composé d'éléments tous compatibles car le conducteur 5 forme un circuit continu reliant les deux extrémités de l'élément principal 2. Tous les éléments ont par conséquent une interface électrique pourvue de un ou plusieurs contacts alignés et connecté à ceux des éléments voisins.

La figure 2 illustre schématiquement un bracelet ou collier ouvert dont certains éléments ne sont pas compatibles électriquement car le circuit formé par les conducteurs traversant les éléments est interrompu à certaines jonctions entre deux éléments voisins par des contacts décalés.

Dans le cas des colliers ou bracelets ouverts, le circuit électrique peut être formé par deux conducteurs traversant chaque élément secondaire fixé de part et d'autre de l'élément principal pour se rejoindre dans les éléments terminaux à chaque extrémité du bracelet ou collier. De cette manière, lorsque tous les éléments sont compatibles un circuit fermé et continu est formé à chaque extrémité de l'élément principal.

Bien entendu, d'autres configurations peuvent également être envisagées en ce qui concerne les connexions et les circuits à former lorsque les éléments sont compatibles.

Selon une variante, l'élément principal comprend un module émetteur / récepteur radiofréquence muni d'une antenne formée par le ou les conducteurs traversant les éléments secondaires. Ce module est n'est activé que si l'antenne forme un ou plusieurs brins ou circuit électriques fermés continus, c'est-à-dire lorsque les éléments secondaires fixés mécaniquement les uns à la suite des autres sont électriquement compatibles. Dans ce cas le module peut émettre des signaux radio à une fréquence de résonance prédéterminée pouvant être reçu par d'autres bracelets ou colliers qui sont également aptes à émettre un signal radio susceptible d'être reçu par le bracelet ou collier en question. Cet aspect de communication permet aux porteurs de bracelets ou collier de s'identifier et former un groupe particulier.

Selon une autre variante illustrée par la figure 4, l'interface électrique est dépourvue de contacts et de connexions filaires reliant les éléments entre eux. Les éléments secondaires 3 comportent chacun une puce RFID 6 configurée de manière à être lue par un module lecteur de puces RFID intégré au dispositif de détection de configuration de l'élément principal 2. Lorsqu'un élément secondaire 3 est fixé mécaniquement à un autre élément (2, 3), la compatibilité est vérifiée par le dispositif de détection de configuration.

Selon une réalisation préférée, le module lecteur de puce est activé par pression sur un bouton 7 disposé sur une des faces latérales ou sur la face supérieure de l'élément principal. A chaque ajout d'un élément secondaire 3 au bracelet ou collier 1, une pression sur le bouton 7 permet de vérifier immédiatement si l'élément ajouté est compatible ou non. L'élément principal 2 comprend une mémoire permettant de stocker des identificateurs de référence sous forme de numéros ou de chaîne de caractères alphanumériques d'éléments secondaires 3 à considérer comme compatibles. Le test de compatibilité consiste alors à confronter l'identificateur, lu par le module lecteur de puce RFID, d'un nouvel élément secondaire 3 avec les identificateurs stockés dans la mémoire et de détecter une éventuelle correspondance. La compatibilité électrique est donc définie par une concordance des identificateurs des puces RFID de chaque élément secondaire avec un identificateur stocké dans la mémoire.

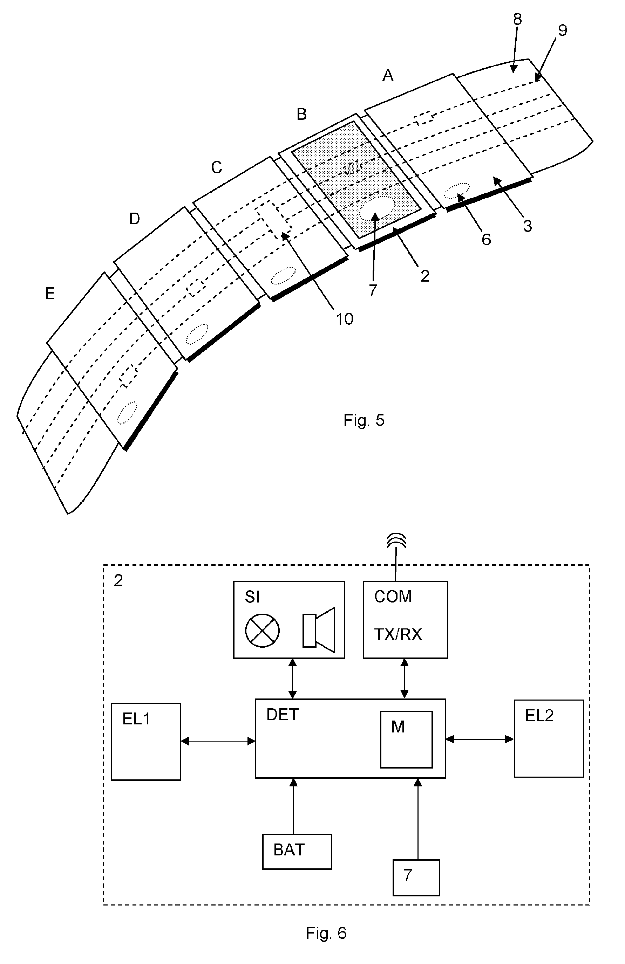

Selon une autre variante illustrée par la figure 5, le bracelet ou collier 1 comprend un ruban support 8 flexible en matière isolante sur lequel sont fixés l'élément principal 2 et les éléments secondaires 3 les uns à la suite des autres. L'interface mécanique est ainsi constituée du ruban support 8 et selon une réalisation préférée d'une fixation amovible des éléments (2, 3) sous forme de pince ou de clip enserrant le ruban support 8. D'autres moyens de fixation mécanique peuvent également être envisagés comme par exemple une adhésion au ruban support du type Velcro ®.

L'interface électrique comprend au moins deux pistes conductrices 9 imprimées sur le ruban support 8 dans le sens de la longueur. Les éléments (2, 3) comportent chacun sur leur face inférieure au moins une plage conductrice 10, de préférence en relief, entrant en contact avec au moins une des pistes 9 imprimée du ruban support 8. La face supérieure d'un élément constituant la face externe visible de cet élément comporte généralement un décor adapté à l'esthétique du bracelet ou du collier.

Dans l'exemple de la figure 5, le ruban support 8 comprend plusieurs pistes 9 parallèles distinctes les une des autres, les éléments (2, 3) sont considérés comme compatibles lorsque les plages conductrices 10 de chaque élément (2, 3) touchent une ou plusieurs pistes 9 du ruban support pour former un circuit électrique continu. En effet, une plage conductrice 10 peut s'étendre de manière à relier deux ou plusieurs pistes 9 pour former un circuit électrique continu avec des plages conductrices 10 d'autres éléments en contact avec des pistes 9 adjacentes. Ainsi les éléments B, C, D sont électriquement compatibles tandis que les éléments A et E ne le sont pas car leur plages conductrices 10 touchent des pistes 9 différentes indépendantes des autres pistes. La plage conductrice 10 de l'élément C forme un pont connectant ensemble deux pistes 9 entraînant une continuité électrique avec les éléments B et D dont les plages conductrices touchent les deux pistes distinctes reliée par le pont. Le bracelet ou collier 1 réalisé selon cette variante est en général fermé lorsqu'il est porté par une personne.

Comme dans la variante à éléments rigides, l'élément principal 2 détecte la compatibilité électrique par la conductivité d'un circuit électrique continu formé par deux ou plusieurs pistes conductrices 9 connectées ensemble via les plages conductrices 10 des éléments (2, 3). L'élément principal 2 inclut également un module émetteur récepteur apte à transmettre des signaux par voie hertzienne lorsque la ou les pistes conductrices 9 connectées via les plages conductrices 10 des éléments (2, 3) forment un brin ou un circuit fermé continu d'une antenne dont la configuration correspond à la fréquence de résonance prédéterminée.

Comme dans la variante à éléments rigides à contacts électriques, le nombre de pistes conductrices (2, 3) et leur disposition sur le ruban support 8 ainsi que le nombre de plages conductrices 10 et leur disposition sur la face inférieure des éléments (2, 3) est au libre choix du styliste ou du fabricant du bracelet ou collier. Selon une autre variante, le système de contacts électriques formé par les pistes conductrices du ruban support 8 et les plages conductrices 10 des éléments (2, 3) est remplacé par une puce RFID 6 incorporée dans chaque élément secondaire 3 fixé sur le ruban support 8. L'élément principal 2 teste la compatibilité électrique par lecture des identificateurs des puces 6 et comparaison de l'identificateur lu avec des identificateurs stockés dans une mémoire de l'élément principal 2. La lecture des puces 6 est également activée par un bouton 7 sur la face supérieure de l'élément principal 2.

L'élément principal 2 comprend les dispositifs et interfaces représentés par le schéma bloc de la figure 6. Le dispositif de détection de configuration DET teste la compactibilité électrique des éléments connectés à l'élément principal 2 par la ou les interfaces électriques EL1, EL2. Une batterie BAT fournit l'énergie nécessaire au fonctionnement de l'ensemble. Un dispositif de signalisation SI connecté au dispositif de détection de configuration DET émet des signaux lumineux ou sonores lorsque les éléments du bracelet ou collier sont compatibles électriquement. Une mémoire M associée au dispositif de détection de configuration DET sert à stocker des identificateurs d'élément pour les variantes à puces RFID ou d'autres données comme par exemple des séquences de signaux à transmettre.

De plus un module COM émetteur TX récepteur RX radiofréquence transmet un signal à destination d'autre bracelet ou collier similaires porté par d'autres personnes. Ce même module reçoit également les signaux transmis par d'autres bracelets et/ou collier à éléments tous compatibles situés dans un périmètre de quelques mètres. Un bouton ou une surface de contact tactile 7 permet d'enclencher manuellement le test de compatibilité, et dans le cas d'un test réussi, le dispositif de signalisation SI s'active.

La transmission de signaux lumineux, sonores et/ou radioélectriques peut également être activée volontairement avec le bouton 7 afin de permettre à une personne portant un bracelet ou collier à élément compatibles électriquement de se manifester et de s'identifier parmi d'autres personnes porteuses d'un bracelet ou d'un collier similaire.

Quelle que soit la variante du bracelet ou collier, l'élément principal 2 comprend au moins un dispositif de détection de configuration DET, un dispositif de signalisation SI, une interface électrique EL1, EL2 et une interface mécanique commune à tous les éléments principal et secondaires. Seule la configuration de ces dispositifs et interfaces diffère selon les variantes.

## Revendications

1. Bracelet ou collier (1) formé par une pluralité d'éléments interchangeables (2, 3) reliés les uns à la suite des autres au moyen d'une interface mécanique (4) commune fixant chaque élément de manière amovible **caractérisé en ce que** ledit bracelet ou collier (1) comporte un élément principal (2) comprenant au moins un dispositif de signalisation (SI) et au moins une liaison à un élément secondaire (3) de la pluralité d'éléments secondaires (3) formant le bracelet ou collier (1), ledit élément principal (2) comprend de plus un dispositif de détection de configuration (DET) des éléments secondaires (3) utilisant une interface électrique (EL1, EL2) combinée avec l'interface mécanique (4) commune, la configuration des éléments secondaires (3) du collier ou bracelet (1) étant définie par un état de compatibilité électrique mutuelle desdits éléments secondaires (3), le dispositif de signalisation (SI) de l'élément principal (2) étant apte à signaler une compatibilité électrique mutuelle réussie et à rester dans un état de veille lorsqu'au moins un élément secondaire (2) est incompatible électriquement.

2. Bracelet ou collier (1) selon la revendication 1, **caractérisé en ce qu'**il comporte des éléments (2, 3) rigides ou semi-rigides et reliés rigidement entre eux à leurs extrémités par une interface mécanique (4) commune comportant un mécanisme de verrouillage assurant un positionnement angulaire constant d'un élément par rapport à un élément voisin.

3. Bracelet ou collier (1) selon la revendication 1 ou 2, **caractérisé en ce que** l'interface électrique (EL1, EL2) d'un élément comprend, à au moins une des extrémités dudit élément, au moins un contact électrique (5, 5') conducteur à pression disposé de manière à se connecter à un contact (5, 5') correspondant d'un élément voisin lorsque lesdits éléments (2, 3) sont électriquement compatibles et à être décalé et déconnecté lorsque lesdits éléments (2, 3) sont électriquement incompatibles.

4. Bracelet ou collier (1) selon l'une des revendications 1 à 3, **caractérisé en ce que** le dispositif de détection de configuration (DET) de l'élément principal (2) est apte à détecter la compatibilité électrique par la vérification de la continuité ou de la résistance d'un circuit électrique formé par des conducteurs (c, c') traversant chaque élément secondaire (3) d'une extrémité à l'autre, lesdits conducteurs (c, c') se connectant via les contacts de l'interface électrique (EL1, EL2), la compatibilité électrique mutuelle des éléments (2, 3) étant définie par la résistance nulle dudit circuit électrique.

5. Bracelet ou collier (1) selon la revendication 4, **caractérisé en ce que** le dispositif de signalisation (SI) est apte à émettre un signal sonore ou lumineux lorsque la compatibilité électrique mutuelle des éléments (2, 3) est réalisée.

6. Bracelet ou collier (1) selon la revendication 4 ou 5, **caractérisé en ce que** l'élément principal (2) comprend un module émetteur / récepteur radiofréquence (COM) muni d'une antenne formée par au moins un conducteur (c, c') traversant chaque élément secondaire (3), ledit module émetteur / récepteur (COM) étant activé lorsque les éléments principal et secondaires (2, 3) sont électriquement compatibles, l'antenne formant au moins un brin ou un circuit électrique fermé continu.

7. Bracelet ou collier (1) selon la revendication 1, **caractérisé en ce que** l'interface mécanique (4) est constituée du ruban support (8) flexible en matière isolante et d'une fixation amovible des éléments (2, 3) sous forme de pince ou de clip enserrant ledit ruban support (8).

8. Bracelet ou collier (1) selon la revendication 7, **caractérisé en ce que** l'interface électrique (EL1, EL2) comprend au moins deux pistes conductrices (9) parallèles imprimées sur le ruban support (8) dans le sens de la longueur, les éléments (2, 3) comportent chacun sur leur face inférieure au moins une plage conductrice (10) entrant en contact avec une ou des pistes conductrices (9) du ruban support (8), la face supérieure d'un élément (2, 3) constituant la face externe visible de l'élément.

9. Bracelet ou collier (1) selon la revendication 8, **caractérisé en ce que** le dispositif de détection de configuration (DET) de l'élément principal (2) est apte à détecter la compatibilité électrique par la vérification de la continuité ou de la résistance d'un circuit électrique formé par les pistes conductrices (9) du ruban support (8) connectant chaque élément (2, 3) via les plages conductrices (10), la compatibilité électrique des éléments (2, 3) étant définie par la résistance nulle dudit circuit électrique.

10. Bracelet ou collier (1) selon l'une des revendication 7 ou 8, **caractérisé en ce que** l'élément principal comprend un module émetteur / récepteur radiofréquence (COM) muni d'une antenne formée par au moins une piste (9) du ruban support (8), ledit module émetteur / récepteur (COM) étant activé lorsque les éléments principal et secondaires (2, 3) sont électriquement compatibles, l'antenne formant au moins un brin ou un circuit électrique fermé continu par une ou des pistes (9) connectées via les plages conductrices (10) desdits éléments.

11. Bracelet ou collier (1) selon la revendication 2 ou 7, **caractérisé en ce que** l'interface électrique (EL1, EL2) comprend une puce RFID (6) incorporée dans chaque élément secondaire (3), ladite puce RFID (6) étant configurée de manière à être lue par un module lecteur de puces RFID intégré au dispositif de détection de configuration (DET) de l'élément principal (2).

12. Bracelet ou collier (1) selon la revendication 7 ou 11, **caractérisé en ce que** le dispositif de détection de configuration (DET) de l'élément principal (2) est apte à détecter la compatibilité électrique par comparaison d'un identificateur d'une puce RFID (6) lu par le module lecteur de puces avec des identificateurs de référence stockés dans une mémoire (M) associée au dispositif de détection de configuration (DET), la compatibilité électrique des éléments étant définie par une concordance des identificateurs des puces RFID de chaque élément secondaire (3) avec un identificateur de référence.

13. Bracelet ou collier (1) selon la revendication 12 , **caractérisé en ce que** l'élément principal (2) comporte un bouton ou une surface de contact tactile (7) destiné à activer manuellement le module lecteur de puce et la détection de la compatibilité électrique des éléments secondaires (3).
